# EUROPÄISCHE PATENTSCHRIFT

(11) **EP 2 945 257 B1**
(45) Veröffentlichungstag und Bekanntmachung des Hinweises auf die Patenterteilung: **13.11.2019**
(21) Anmeldenummer: 14168026.4
(22) Anmeldetag: 13.05.2014
(51) Int. Cl.: H02J 7/00, H02M 1/00

(54) **Symmetrieren von elektrischen Spannungen an elektrischen Kondensatoren in einer Reihenschaltung**
Balancing electric voltages of electric capacitors connected in series
Équilibrage des tensions électriques sur les condensateurs électriques dans un circuit en série

(43) Veröffentlichungstag der Anmeldung: 18.11.2015
(73) Patentinhaber: Siemens Aktiengesellschaft, 80333 München (DE)
(72) Erfinder: Stadter, Norbert, 96155 Buttenheim (DE)

(56) Entgegenhaltungen:
- WO-A1-2010/015105
- WO-A2-2012/042401
- DE-A1- 4 422 409
- US-A1- 2005 207 183

## Beschreibung

Die vorliegende Erfindung betrifft eine Schaltungsanordnung zum Symmetrieren von elektrischen Spannungen an elektrischen Kondensatoren in einer Reihenschaltung gemäß dem Oberbegriff von Anspruch 1. Darüber hinaus betrifft die Erfindung ein Verfahren zum Symmetrieren von elektrischen Spannungen an elektrischen Kondensatoren in einer Reihenschaltung gemäß dem Oberbegriff von Anspruch 7.

Gattungsgemäße Schaltungsanordnungen sowie Verfahren sind dem Grunde nach bekannt, sodass es eines gesonderten druckschriftlichen Nachweises hierfür nicht bedarf. Bekannt ist es, bei einer Reihenschaltung von Kondensatoren eine Symmetrierung mit parallel zu jedem Kondensator angeschlossenen elektrischen Widerständen zu erreichen. Symmetrierung der elektrischen Spannung der Kondensatoren bedeutet im Sinne dieser Anmeldung, dass die in Reihe geschalteten elektrischen Kondensatoren im Wesentlichen mit der gleichen elektrischen Spannung beaufschlagt werden. Ohne Maßnahmen zur Symmetrierung der elektrischen Spannung an den in Reihe geschalteten elektrischen Kondensatoren ergibt sich eine ungleichmäßige Spannungsbeaufschlagung in Abhängigkeit von elektrischen Verlustströmen der elektrischen Kondensatoren und/oder dergleichen. Mittels der parallelgeschalteten Widerstände kann erreicht werden, dass die Spannungsabweichungen verursachenden Effekte weitgehend vermieden beziehungsweise unterdrückt werden können.

Bei der vorgenannten passiven Art der Symmetrierung mittels elektrischer Widerstände wird dies dadurch erreicht, dass durch die elektrischen Widerstände ein Querstrom fließt, der ein Vielfaches des jeweiligen Verluststromes der elektrischen Kondensatoren beträgt. Vorzugsweise ist die Höhe des Querstromes derart gewählt, dass die eine Unsymmetrie verursachenden Effekte hinsichtlich ihrer Relevanz in den Hintergrund treten. Dadurch wird eine Symmetrierung der elektrischen Spannungen der in Reihe geschalteten Kondensatoren erzwungen. Zugleich wird jedoch während des bestimmungsgemäßen Betriebs dauerhaft eine Verlustleistung erzeugt, die einerseits einen Wirkungsgrad der Reihenschaltung reduziert und andererseits Wärme erzeugt, die aus der Schaltungsanordnung abgeführt werden muss. Besonders bei Reihenschaltungen von Kondensatoren in Zwischenkreisen von elektrischen Energiewandlern wie Wechselrichter, Frequenzumrichter, getakteten Gleichspannungswandlern und/oder dergleichen, die mit hohen Leistungen im Bereich einiger Kilowatt arbeiten, sind die nachteiligen Effekte relevant und störend.

Gerade bei Einrichtungen, die mit hohen Leistungen arbeiten, sind auch entsprechend hohe Spannungen in Zwischenkreisen erforderlich, bei denen eine Reihenschaltung aus Kondensatoren, beispielsweise Elektrolytkondensatoren, aus konstruktiven Gründen oftmals unvermeidlich ist. Dies liegt unter anderem daran, dass aus Kosten- sowie Beschaffungsgründen Kondensatoren aus einer Serienproduktion genutzt werden sollen. Zumeist sind solche Kondensatoren jedoch nicht unmittelbar zum Einsatz für den vorgesehenen Betrieb geeignet, insbesondere weil ihre Bemessungsspannung deutlich unter der Bemessungsspannung des Zwischenkreises liegt. Eine Reihenschaltung solcher Kondensatoren ist deshalb die übliche Maßnahme zum Aufbau eines entsprechenden Zwischenkreises. Dabei treten die vorgenannten Probleme auf. Bei diesen Leistungsklassen treten nicht unerhebliche Verluste bei Nutzung einer passiven Symmetrierung auf.

Die WO 2012/042401 A2 offenbart ein Verfahren, eine Schaltung und eine Topologie für die Verwendung dieser Schaltung in einer Li-Ion Batterie oder einer anderen Batterie, deren einzelne Zellen von einem Energieausgleich profitieren. Das gesamte Batteriesystem zeichnet sich im Vergleich zu Implementierungen in bekannten Batteriesystemen durch einen hohen Wirkungsgrad aus, wobei insbesondere die Wärmebelastung reduzierbar ist. Die Schaltungsaktivitäten sind dabei in Bezug auf jede Zelle kontinuierlich und bidirektional.

Es ist demnach die Aufgabe der Erfindung, eine verbesserte Symmetrierung der elektrischen Spannungen bei in Reihe geschalteten Kondensatoren zu erreichen.

Als Lösung wird gemäß einem ersten Aspekt der Erfindung eine Schaltungsanordnung gemäß dem unabhängigen Anspruch 1 vorgeschlagen. Gemäß einem zweiten Aspekt der Erfindung wird ein Verfahren gemäß dem weiteren unabhängigen Anspruch 7 vorgeschlagen. Vorteilhafte Ausführungsformen sind in den abhängigen Ansprüchen definiert.

Mit der Erfindung wird insbesondere schaltungsanordnungsseitig vorgeschlagen, dass die Schaltungsanordnung jeweils ein an jedem der elektrischen Kondensatoren angeschlossenes Halbbrückenmodul, welches einen Mittelanschluss bereitstellt, und einen Taktgeber zum Betreiben aller Halbbrückenmodule im Taktbetrieb aufweist, wobei an dem Mittelanschluss jedes Halbbrückenmoduls ein jeweiliger erster Anschluss einer dem jeweiligen Halbbrückenmodul individuell zugeordneten elektrischen Spule angeschlossen ist, und ein zweiter Anschluss dieser elektrischen Spule entsprechend an einem von zwei Anschlüssen des parallel zum entsprechenden Halbbrückenmodul angeschlossenen Kondensators angeschlossen ist, wobei der Taktgeber eingerichtet ist, die Halbbrückenmodule im Taktbetrieb synchron zu betreiben, wobei die elektrischen Spulen magnetisch derart gekoppelt sind, dass sich die durch die elektrischen Spulen erzeugten magnetischen Flüsse addieren.

Mit diesen Maßnahmen wird erreicht, dass eine Symmetrierung der elektrischen Spannungen der in Reihe geschalteten elektrischen Kondensatoren erreicht werden kann, ohne dass eine große Verlustleistung wie beim Stand der Technik erforderlich ist. Durch die erfindungsgemäße Schaltungsanordnung ist es nämlich möglich, Ladungen zwischen den einzelnen Kondensatoren auszutauschen, um eine Spannungssymmetrierung an den in Reihe geschalteten elektrischen Kondensatoren erreichen zu können. Dabei erweist es sich als vorteilhaft, dass mit Hilfe eines durch die elektrischen Spulen gebildeten Transformators für eine gleiche Spannungsaufteilung an den Kondensatoren gesorgt wird. Sobald eine Unsymmetrie bezüglich der elektrischen Spannungen an den in Reihe geschalteten elektrischen Kondensatoren vorliegt, wird von dem elektrischen Kondensator mit der höchsten Spannung zum elektrischen Kondensator mit der niedrigeren Spannung Energie transformiert. Vorzugsweise ist das Windungsverhältnis von Wicklungen der elektrischen Spulen Eins. Besonders vorteilhaft erweist es sich dabei, dass gemäß der Erfindung das Energiewandelprinzip gemäß dem Gegentaktprinzip erfolgt. Dies erlaubt es, den durch die elektrischen Spulen gebildeten Transformator sehr kompakt auszubilden, da er nicht unipolar, sondern bipolar mit magnetischer Flussdichte beaufschlagt wird. Vorzugsweise sind die elektrischen Spulen zum Zwecke der magnetischen Kopplung auf einem gemeinsamen ferromagnetischen Kern angeordnet, beispielsweise ein geblechter Eisenkern, vorzugsweise jedoch ein Ferritkern und/oder dergleichen. Bei der Erfindung handelt es sich somit um eine aktive Symmetrierung.

Ein Halbbrückenmodul im Sinne der Anmeldung ist vorzugsweise eine Baueinheit, die zwei in Serie geschaltete Halbleiterschalter aufweist. Die in Serie geschalteten Halbleiterschalter sind vorliegend jeweils an den entsprechenden elektrischen Kondensator parallel angeschlossen. Natürlich kann das Halbbrückenmodul auch aus diskreten elektronischen Bauelementen gebildet sein. Das Halbbrückenmodul bezeichnet somit dem Grunde nach eine Schaltungstopologie.

Ein Halbleiterschalter im Sinne dieser Offenbarung ist ein vorzugsweise steuerbares elektronisches Schaltelement, beispielsweise ein Transistor, ein Thyristor, Kombinationsschaltungen hiervon, insbesondere mit parallelgeschalteten Freilaufdioden, beispielsweise ein Metalloxid-Semiconductor-Feldeffekttransistor (MOSFET), ein Isolated Gate Bipolar Transistor (IGBT), vorzugsweise mit integrierten Freilaufdioden, oder dergleichen.

Der Mittelanschluss eines Halbbrückenmoduls ist ein Anschluss, der mit dem Verbindungspunkt der in Serie geschalteten Halbleiterschalter elektrisch leitend verbunden ist.

Der Schaltbetrieb eines Halbleiterschalters bedeutet, dass in einem eingeschalteten Zustand zwischen den eine Schaltstrecke bildenden Anschlüssen des Halbleiterschalters ein sehr geringer elektrischer Widerstand bereitgestellt wird, sodass ein hoher Stromfluss bei sehr kleiner Restspannung möglich ist. Im ausgeschalteten Zustand ist die Schaltstrecke des Halbleiterschalters hochohmig, das heißt, sie stellt einen hohen elektrischen Widerstand bereit, sodass auch bei hoher, an der Schaltstrecke anliegender elektrischer Spannung im Wesentlichen kein oder nur ein geringer, insbesondere vernachlässigbarer, Stromfluss vorliegt. Hiervon unterscheidet sich der Linearbetrieb, der jedoch im Taktbetrieb nicht zum Einsatz kommt. Der jeweilige Schaltzustand kann mittels eines entsprechenden elektrischen Potentials an einer Steuerelektrode des Halbleiterschalters eingenommen werden.

Synchroner Taktbetrieb der Halbbrückenmodule bedeutet demnach, dass sämtliche, an einem gegenüber dem anderen Anschluss des Halbbrückenmoduls positiven Anschluss angeschlossene Halbleiterschalter im Wesentlichen gleichzeitig getaktet, das heißt, ein- beziehungsweise ausgeschaltet werden. Das Gleiche gilt dem Grunde nach auch für die gegenüberliegenden Halbleiterschalter der jeweiligen Habbrückenmodule. Die Halbleiterschalter eines Halbbrückenmoduls werden wechselweise eingeschaltet, sodass ein Querstrom durch die beiden Halbleiterschalter weitgehend vermieden ist. Hierdurch kann eine einfache Steuerung erreicht werden, weil der Taktgeber lediglich zwei Taktsignale zu erzeugen braucht, nämlich ein Taktsignal für den oberen Halbleiterschalter sowie ein Taktsignal für den unteren Halbleiterschalter der jeweiligen Halbbrückenmodule. Mit diesen Signalen können folglich alle Halbbrückenmodule betrieben werden. Vorzugsweise sieht der Taktgeber vor, dass die Taktsignale für die Halbleiterschalter eine Totzeit aufweisen, sodass aufgrund physikalischer Eigenschaften mögliche gemeinsame Einschaltzeiten vermieden werden können. Eine solche Zeitdifferenz zwischen einer abfallenden Flanke eines der Steuersignale und der darauffolgenden ansteigenden Flanke des anderen der beiden Steuersignale wird Totzeit genannt. Die Totzeit ist jedoch in der Regel wesentlich kleiner als die jeweiligen Einschalt- beziehungsweise Ausschaltzeiten der Halbleiterschalter.

Der Taktgeber kann durch eine elektronische Schaltung, beispielsweise eine Rechnereinheit, die mittels eines Programms gesteuert wird, aber auch einer Hardwareschaltung, Kombinationen hiervon oder dergleichen, gebildet sein. Die Halbleiterschalter der Halbbrückenmodule weisen an Steueranschlüssen angeschlossene Steuerelektroden auf, über die die entsprechenden Taktsignale zugeführt werden können. Vorzugsweise ist eine galvanische Trenneinheit vorgesehen, um die auf unterschiedlichem elektrischem Potenzial angeschlossenen Halbbrückenmodule mit einem gemeinsamen Taktsignal des Taktgebers ansteuern zu können. Eine solche galvanische Trennung kann beispielsweise mittels Opto-Kopplern, Übertragern und/oder dergleichen erreicht werden.

Zwischen den zweiten Anschlüssen der elektrischen Spulen und den Anschlüssen der entsprechenden elektrischen Kondensatoren ist jeweils ein Serienkondensator geschaltet. Dadurch können Resonanzen ausgebildet werden, die eine energietechnische Kopplung verbessern. Der jeweilige Serienkondensator ist somit im Betrieb der Schaltungsanordnung als Resonanzkondensator betreibbar.

Eine vorteilhafte Weiterbildung sieht vor, dass die Schaltungsanordnung eine Hilfsspule aufweist, die magnetisch mit den elektrischen Spulen gekoppelt ist. Dadurch ist es möglich, eine Hilfsspannung zu erzeugen, die zur Energieversorgung der Schaltungsanordnung benutzt werden kann. Darüber hinaus kann die Hilfsspule auch Energie für die Elektronikversorgung des gesamten Gerätes zur Verfügung stellen oder den Betrieb von Kühleinrichtungen, insbesondere Ventilatoren, bereitstellen. Diese Ausgestaltung erweist sich insbesondere dann als vorteilhaft, wenn bei Einrichtungen mit großen Spannungen über 1.000 Volt Kühleinrichtungen betrieben werden sollen, die lediglich für Niederspannung im Sinne der Normung ausgelegt sind. Es ist also in diesem Fall nicht erforderlich, eine separate Energieversorgung für die Elektronikversorgung oder diese Kühleinrichtungen vorzusehen. Insgesamt erlaubt es diese Ausgestaltung, unabhängig von einem Vorhandensein von Kleinspannungen beziehungsweise Niederspannungen im Sinne der Normung eine eigene Energieversorgung für zu versorgende Einheiten bereitzustellen. Es braucht also nicht eine separate Energietransformation vorgesehen werden. Die Hilfsspule kann an einen Gleichrichter angeschlossen sein, der eine Gleichspannung bereitstellt. Zu diesem Zweck kann eine Gegentaktgleichrichtung, aber auch eine Brückengleichrichtung vorgesehen sein. Die Gleichspannung kann darüber hinaus mittels eines Kondensators geglättet sein.

Besonders vorteilhaft erweist es sich, wenn die Hilfsspule eine Mittelanzapfung aufweist. Dies erlaubt es, eine Gegentaktgleichrichtung bereitzustellen und so eine Ausnutzung des Magnetfeldes wie bei einer Brückengleichrichtung zu erreichen, wobei jedoch gegenüber der Brückengleichrichtung reduzierte Verluste im Gleichrichter erreichbar sind. Auch hier kann ergänzend eine Glättung der gleichgerichteten elektrischen Spannung mittels eines Kondensators vorgesehen sein.

Weiterhin wird vorgeschlagen, dass die Schaltungsanordnung einen Steuertransformator zum steuerseitigen Koppeln der Halbbrückenmodule mit dem Taktgeber aufweist. Der Steuertransformator kann zu diesem Zweck für jeden Halbleiterschalter der Halbbrückenmodule eine eigene Wicklung zum Anschließen an einen Steueranschluss des jeweiligen Halbleiterschalters aufweisen. Zugleich kann vorgesehen sein, dass lediglich ein einziger Steuertransformator für sämtliche Halbbrückenmodule, besonders bevorzugt für sämtliche Halbleiterschalter sämtlicher Halbbrückenmodule, vorgesehen ist. Dies erlaubt es, auf besonders einfache Weise sämtliche Halbleiterschalter sämtlicher Halbbrückenmodule steuern zu können. Dabei kann vorgesehen sein, dass durch Systemeigenschaften geeignete Totzeiten erzeugt werden, die es erlauben, beide Halbleiterschalter eines jeden Halbbrückenmoduls über einen gemeinsamen Steuertransformator ansteuern zu können.

Um die Funktion der Schaltungsanordnung besser überwachen zu können, wird vorgeschlagen, dass die Schaltungsanordnung Strommesseinheiten für jedes der Halbbrückenmodule aufweist, die jeweils eine an den Serienkondensatoren angeschlossene Messschaltung aufweisen. Vorzugsweise ist demnach für jedes Halbbrückenmodul eine eigene Strommesseinheit vorhanden. Die Strommesseinheit erlaubt es, die Strombeanspruchung des Halbbrückenmoduls zu erfassen und einen entsprechenden Messwert dem Taktgeber zuzuführen. Dies erlaubt es, Schutzfunktionen zu realisieren, insbesondere wenn beispielsweise einer oder mehrere der Kondensatoren im bestimmungsgemäßen Betrieb einen Störfall aufzeigen. Ein Störfall kann beispielsweise dadurch gegeben sein, dass der jeweilige elektrische Kondensator seine Bemessungsspannung nicht mehr zu führen vermag. Ein Störfall kann auch dadurch gegeben sein, dass ein elektrischer Kondensator hinsichtlich anderer technischer Parameter überlastet wird, beispielsweise hinsichtlich der Temperatur, hinsichtlich einer Pulsbelastung und/oder dergleichen.

Die Taktfrequenz der Steuersignale des Taktgebers ist vorzugsweise derart gewählt, dass auch Pulsbeanspruchungen der Reihenschaltung aus elektrischen Kondensatoren hinreichend zuverlässig erfasst werden können und eine entsprechende Symmetrierungsmaßnahme mittels des Taktgebers so rechtzeitig eingeleitet werden kann, dass eine unsymmetrische Spannungsaufteilung auf die Kondensatoren der Reihenschaltung weitgehend vermieden werden kann. Besonders vorteilhaft sollte zumindest eine auch nur kurzzeitige Überschreitung der Bemessungsspannung der elektrischen Kondensatoren verhindert werden können. Das Tastverhältnis der Einschaltzeiten der beiden Halbleiterschalter eines jeweiligen Halbbrückenmoduls ist vorzugsweise 1. Hierdurch kann eine zuverlässige Symmetrierung erreicht werden.

Besonders vorteilhaft wird vorgeschlagen, dass die Messschaltung eine Gleichrichteinheit aufweist. Dadurch kann der durch die Messschaltung bereitgestellte Wert durch den Taktgeber auf einfache Weise verarbeitet werden. Insbesondere erlaubt es diese Ausgestaltung, den von der Messschaltung bereitgestellten Wert zu digitalisieren und einer digitalen Signalverarbeitung mittels des Taktgebers zuführen zu können.

Eine andere Möglichkeit sieht vor, dass zu jedem der Halbbrückenmodule ein jeweiliges zweites Halbbrückenmodul parallelgeschaltet ist und dass die zweiten Anschlüsse der elektrischen Spulen an jeweils entsprechende Mittelanschlüsse der zweiten Halbbrückenmodule angeschlossen sind. Die zweiten Anschlüsse der elektrischen Spule sind also anstelle des Anschlusses an den jeweiligen elektrischen Kondensator an die jeweiligen Mittelanschlüsse der zweiten Halbbrückenmodule angeschlossen. Dadurch kann der Betrieb im Sinne einer Vollbrücke erreicht werden, wodurch die Wirksamkeit der Schaltungsanordnung weiter verbessert werden kann. Darüber hinaus ergeben sich auch Vorteile hinsichtlich der Symmetrierungsdynamik sowie der Auslegung der magnetischen Kopplung der elektrischen Spulen.

Verfahrensseitig wird insbesondere vorgeschlagen, dass bei einem Verfahren zum Symmetrieren von elektrischen Spannungen an elektrischen Kondensatoren in einer Reihenschaltung ein jeweils an jedem der elektrischen Kondensatoren angeschlossenes und einen Mittelanschluss bereitstellendes Halbbrückenmodul im Taktbetrieb mittels eines Taktgebers synchron mit allen anderen weiteren Halbbrückenmodulen betrieben wird, wobei mittels jeweils den elektrischen Kondensatoren individuell zugeordneter und magnetisch miteinander gekoppelter elektrischer Spulen magnetische Flüsse erzeugt werden, wobei die elektrischen Spulen mit jeweils einem ersten Anschluss an Mittelanschlüssen der entsprechenden Halbbrückenmodule sowie mit jeweils einem zweiten Anschluss an den dazu jeweils parallelgeschalteten elektrischen Kondensatoren derart angeschlossen sind, dass sich die durch die elektrischen Spulen erzeugten magnetischen Flüsse addieren.

Dadurch werden die bereits im Zusammenhang mit der Schaltungsanordnung gemäß der Erfindung diskutierten Vorteile erreicht.

Gemäß einer Weiterbildung wird vorgeschlagen, dass mittels einer Hilfsspule eine Hilfsspannung erzeugt wird. Mittels der Hilfsspannung kann eine Spannungsversorgung für den Taktgeber und/oder die Halbbrückenmodule und/oder des gesamten Gerätes bereitgestellt werden. Die Hilfsspannung kann geregelt sein, beispielsweise, indem die Hilfsspannung gemessen wird, mit einem Vergleichswert verglichen wird und eine Differenz zum Einstellen einer Taktfrequenz des Taktgebers genutzt wird. Dadurch ist es möglich, neben der Synchronisierungsfunktion zugleich auch eine Spannungsversorgungsfunktion mit einer geregelten Spannungsversorgung zu realisieren.

Darüber hinaus wird vorgeschlagen, dass ein Wert der Hilfsspannung mittels einer Taktfrequenz des Taktgebers eingestellt wird. Die Taktfrequenz kann der Frequenz der Taktsignale für die Halbleiterschalter der Halbbrückenmodule entsprechen. Vorzugsweise wird die Taktfrequenz lediglich so groß gewählt, wie sie für die gewünschte Hilfsspannung erforderlich ist. Sie kann aber auch unter Berücksichtigung ergänzender Randbedingungen wie zum Beispiel dynamischer Bedingungen eingestellt werden.

Weitere Vorteile und Merkmale sind der folgenden Beschreibung von Ausführungsbeispielen anhand der folgenden Figuren zu entnehmen. In den Figuren bezeichnen gleiche Bezugszeichen gleiche Bauteile und Funktionen.

Es zeigen:
- FIG 1: schematisch ein Prinzipschaltbild für eine Schaltungsanordnung zur Symmetrierung elektrischer Spannungen bei in Reihe geschalteten Kondensatoren gemäß dem Stand der Technik,
- FIG 2: ein schematisches Prinzipschaltbild einer ersten Ausführungsform einer Schaltungsanordnung zur Symmetrierung elektrischer Spannungen in Reihe geschalteter Kondensatoren gemäß der Erfindung,
- FIG 3: ein schematisches Prinzipschaltbild einer Schaltungsanordnung basierend auf dem Ausführungsbeispiel gemäß FIG 2, wobei ergänzend eine Hilfsspannung erzeugt wird,
- FIG 4: in schematischer Darstellung ein Prinzipschaltbild eines Ersatzschaltbildes für den Transformator gemäß FIG 3,
- FIG 5: ein schematisches Prinzipschaltbild einer weiteren Ausgestaltung einer Schaltungsanordnung gemäß der Erfindung, wobei drei in Reihe geschaltete Kondensatoren hinsichtlich ihrer elektrischen Spannung symmetriert werden,
- FIG 6: in schematischer Ansicht ein Prinzipschaltbild für eine Schaltungsanordnung gemäß der Erfindung basierend auf dem Ausführungsbeispiel gemäß FIG 3,
- FIG 7: ein schematisches Prinzipschaltbild einer weiteren Ausgestaltung für eine Schaltungsanordnung gemäß der Erfindung basierend auf dem Ausführungsbeispiel gemäß FIG 3, jedoch mit einem einzigen steuerseitigen Übertrager für sämtliche Halbleiterschalter sämtlicher Halbbrückenmodule in einer schematischen Prinzipschaltbildansicht,
- FIG 8: in einem schematischen Prinzipschaltbild eine weitere Ausgestaltung der Erfindung basierend auf dem Ausführungsbeispiel gemäß FIG 3 jedoch ergänzend mit einer Strommesseinheit für jedes der Halbbrückenmodule, und
- FIG 9: ein schematisches Prinzipschaltbild einer anderen Ausgestaltung für eine Symmetrierung elektrischer Spannungen in Reihe geschalteter Kondensatoren, wobei für jede primärseitige Wicklung eine Vollbrückenschaltung vorgesehen ist.

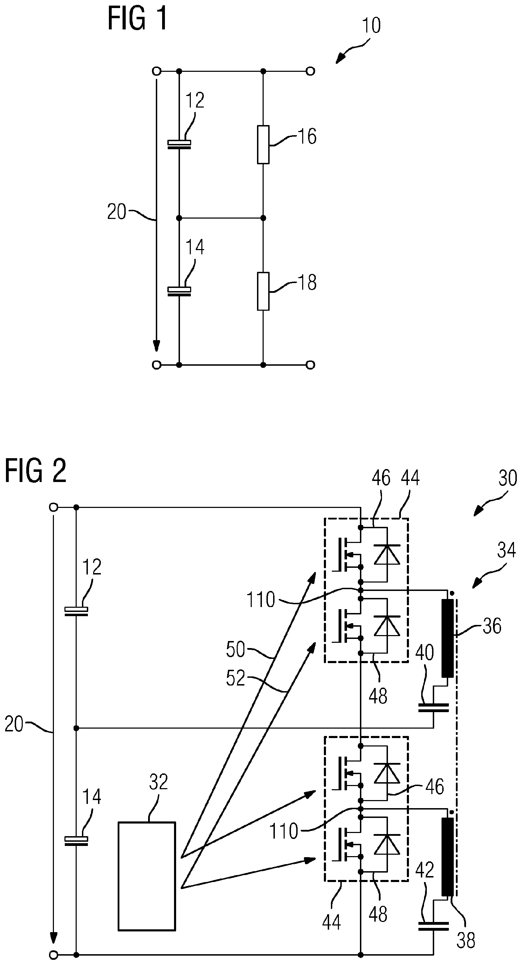

FIG 1 zeigt ein schematisches Prinzipschaltbild für eine Schaltungsanordnung 10 gemäß dem Stand der Technik mit zwei in Reihe geschalteten Kondensatoren 12, 14, an denen eine elektrische Spannung 20 anliegt. Die Kondensatoren 12, 14 sind Bestandteil eines nicht weiter spezifizierten Zwischenkreises eines nicht weiter dargestellten elektronischen Energiewandlers. Vorliegend sind die Kondensatoren 12, 14 als Elektrolytkondensatoren ausgebildet.

Damit die Spannungsbeaufschlagung der elektrischen Kondensatoren 12, 14 im Wesentlichen symmetrisch ist, das heißt, dass sie mit der im Wesentlichen gleichen elektrischen Spannung beaufschlagt werden, ist ergänzend zu jedem der Kondensatoren 12, 14 ein elektrischer Widerstand 16, 18 parallelgeschaltet. Die Widerstandswerte der elektrischen Widerstände 16, 18 sind derart gewählt, dass sie ein Mehrfaches von Restströmen der Elektrolytkondensatoren 12, 14 betragen. Dadurch ist sichergestellt, dass sich die elektrische Spannung 20 im Wesentlichen hälftig auf die beiden Elektrolytkondensatoren 12, 14 aufteilt.

Diese Schaltung findet sich häufig bei Frequenzumrichtern mit einem Spannungszwischenkreis, bei dem aufgrund der Höhe der elektrischen Spannung mehrere Kondensatoren in Reihe geschaltet sind. Üblicherweise reicht die maximale Spannungsfestigkeit der verwendeten Elektrolytkondensatoren für die Zwischenkreisspannung, die an der Reihenschaltung anliegt, nicht aus. Für den zuverlässigen Betrieb ist es deshalb erforderlich, eine symmetrische Spannungsaufteilung in der Reihenschaltung der Elektrolytkondensatoren 12, 14 zu gewährleisten, da es ansonsten aufgrund unterschiedlicher Leckströme der Elektrolytkondensatoren 12, 14 zu unerlaubten Spannungsbeanspruchungen an wenigstens einem der Elektrolytkondensatoren 12, 14 kommen kann.

Die aus FIG 1 ersichtliche Widerstandsbeschaltung vermeidet dies, wobei jedoch signifikante Verlustleistung entsteht, wenn einerseits bei gleichen Leckströmen der Elektrolytkondensatoren 12, 14 eine Symmetrierung nicht erforderlich wäre und andererseits auch bei maximal unterschiedlichen Leckströmen die Symmetrie durch noch größere Ströme durch die elektrischen Widerstände 16, 18 in Kauf genommen werden muss.

FIG 2 zeigt eine Schaltungsanordnung 30 gemäß der Erfindung in einem schematischen Prinzipschaltbild, welches die Nachteile der Schaltung gemäß FIG 1 vermeidet. Zu diesem Zweck nutzt die Schaltungsanordnung 30 gemäß FIG 2 einen Transformator 34, der zwei galvanisch getrennte elektrische Spulen 36, 38 aufweist. Die beiden elektrischen Spulen 36, 38 sind auf einem gemeinsamen, nicht näher bezeichneten Ferritkern aufgebracht und weisen die gleichen Windungszahlen sowie den gleichen Wickelsinn auf.

Wie aus der Schaltung gemäß FIG 2 ersichtlich ist, soll mit der Schaltungsanordnung 30 wiederum die elektrische Spannungsbeaufschlagung an den Elektrolytkondensatoren 12, 14, wie zur FIG 1 bereits erläutert, symmetriert werden. Die Reihenschaltung aus diesen Elektrolytkondensatoren 12, 14 wird wiederum mit der elektrischen Zwischenkreisspannung 20 beaufschlagt.

Zu diesem Zweck ist zu jedem der beiden Elektrolytkondensatoren 12, 14 jeweils ein Halbbrückenmodul 44 mit jeweils zwei in Reihe geschalteten Halbleiterschaltern 46, 48 parallelgeschaltet. Vorliegend sind die Halbleiterschalter 46, 48 durch MOSFET's gebildet. Diese sind in Reihe geschaltet. Dem Grunde nach braucht das Halbbrückenmodul 44 nicht als Baueinheit realisiert zu sein, sondern es kann auch durch diskret miteinander verschaltete Bauelemente, hier in Serie geschaltete Halbleiterschalter 46, 48, gebildet sein.

Jedes der Halbbrückenmodule 44 weist einen Mittelanschluss 110 auf. Dies ist der Anschluss, an dem die beiden Halbleiterschalter 46, 48 elektrisch miteinander verbunden sind. An den Mittelanschluss 110 ist jeweils die individuell zugeordnete elektrische Spule 36, 38 mit einem ersten Anschluss angeschlossen. Ein zweiter Anschluss der elektrischen Spulen 36, 38 ist in Serie mit einem entsprechenden Serienkondensator 40, 42 geschaltet, welcher Serienkondensator wiederum an einem Anschluss der Elektrolytkondensatoren 12, 14 angeschlossen ist. Vorliegend ist der Anschluss mit dem niedrigeren elektrischen Potenzial verbunden, er kann ebenso mit dem höheren Potential verbunden sein. Die elektrischen Spulen 36, 38 weisen Wicklungen mit den gleichen Windungszahlen sowie dem gleichen Wickelsinn auf.

Die Schaltungsanordnung 30 umfasst ferner einen Taktgeber 32, der Taktsignale 50, 52 (A, B) als Steuersignale erzeugt, die die Halbleiterschalter 46, 48 der Halbbrückenmodule 44 ansteuern. Vorliegend ist vorgesehen, dass der Halbleiterschalter 46 der Halbbrückenmodule 44 durch das Taktsignal 50 und der andere Halbleiterschalter 48 der Halbbrückenmodule 44 durch das entsprechende Taktsignal 52 gesteuert sind. Die Taktsignale 50, 52 sind vorliegend komplementär ausgebildet und weisen ein Tastverhältnis von etwa 50 Prozent auf.

Mit der Schaltungsanordnung 30 kann erreicht werden, dass eine gleiche Spannungsaufteilung auf die Elektrolytkondensatoren 12, 14 erreicht wird. Sobald eine Unsymmetrie diesbezüglich vorliegt, wird von dem Elektrolytkondensator mit der höheren Spannung zu dem Elektrolytkondensator mit der niedrigeren Spannung transformiert. Das Windungszahlverhältnis der elektrischen Spulen 36, 38 ist 1. Die Erfindung nutzt hier demnach das Wandlungsprinzip in Form des Gegentaktprinzips.

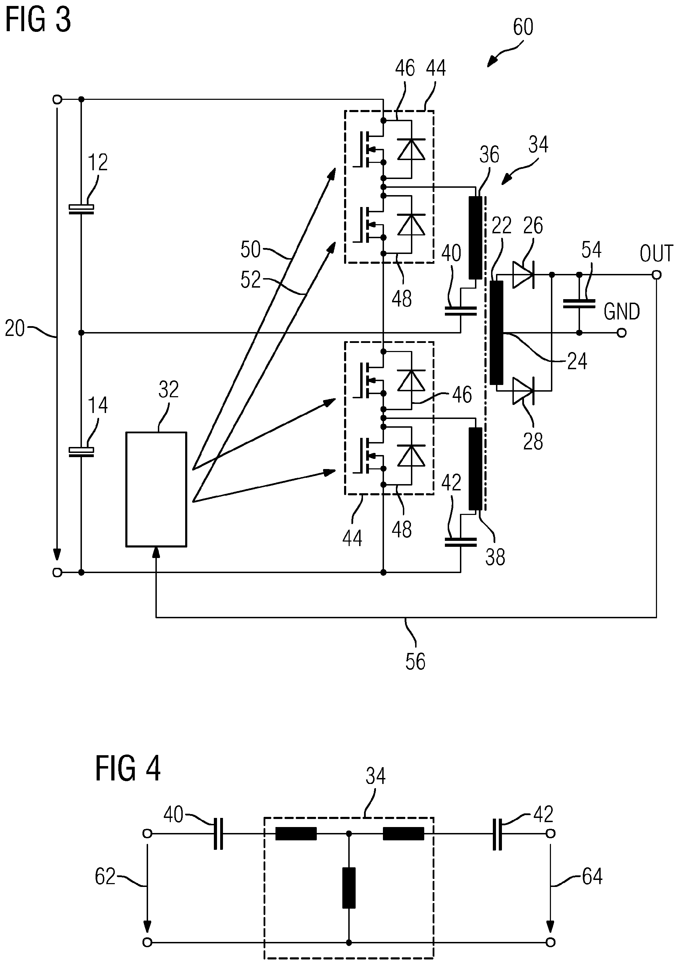

FIG 3 zeigt eine weitere Schaltungsanordnung 60 gemäß der Erfindung, die im Wesentlichen auf der Schaltungsanordnung 30 gemäß FIG 2 basiert. Es wird deshalb lediglich im Folgenden auf die Unterschiede gegenüber dem Ausführungsbeispiel zu FIG 2 eingegangen. Bezüglich der weiteren Aspekte wird auf die vorhergehenden Ausführungen zum Ausführungsbeispiel gemäß FIG 2 verwiesen.

In der vorliegenden Ausgestaltung gemäß FIG 3 ist vorgesehen, dass der Transformator 34 eine dritte elektrische Spule 22 aufweist, deren Wicklung eine Mittelanzapfung 24 bereitstellt. Die Wicklungsenden der elektrischen Spule 22 sind über Dioden 26, 28 auf einen ersten Anschluss eines elektrischen Kondensator 54 geführt, der mit seinem weiteren Anschluss an dem Mittelanschluss 24 angeschlossen ist. Am elektrischen Kondensator 54 wird somit eine Hilfsspannung 56 bereitgestellt, die dem Taktgeber 32 zugeführt wird. Vorliegend dient diese Spannung zur elektrischen Energieversorgung des Taktgebers 32, sodass eine separate Energieversorgung für den Taktgeber 32 eingespart werden kann.

In dieser Ausgestaltung stellen die Kondensatoren 40, 42 in Verbindung mit Streuinduktivitäten zwischen den elektrischen Spulen 36, 38 zu der elektrischen Spule 22 Resonanzkreise dar. Der Kondensator 54 dient der Glättung der gleichgerichteten Spannung. Die Höhe der elektrischen Spannung 56 kann durch die Taktfrequenz des Taktgebers 32 eingestellt werden. Bei den Taktsignalen 50, 52 (A, B) des Taktgebers 32 handelt es sich um zwei um 180 Grad verschobene Rechtecksignale mit einem Tastverhältnis von etwa 50 Prozent.

Das grundlegende Funktionsprinzip der Schaltungsanordnung 60 gemäß FIG 3 ergibt sich unter Zuhilfenahme der schematischen Darstellung eines Ersatzschaltbildes gemäß FIG 4. Der Taktgeber 32 steuert die beiden Halbbrückenmodule 44 mit einem Rechtecksignal nach dem Gegentaktprinzip an. Sämtliche Halbleiterschalter 46 schalten gleichzeitig im Wechsel zu sämtlichen Halbleiterschaltern 48. Aufgrund des Tastverhältnisses von 50 Prozent stellt sich an den Kondensatoren 40, 42 jeweils etwa die halbe Spannung in Bezug auf die entsprechenden Elektrolytkondensatoren 12, 14 ein. Sind die Spannungen an den Elektrolytkondensatoren 12, 14 ausgeglichen, transformiert der Transformator 34 die Wechselspannungen aus den Halbbrückenmodulen 44 über die elektrischen Spulen 36, 38 zur elektrischen Spule 22. Aus den beiden Elektrolytkondensatoren 12, 14 wird jeweils Strom in gleicher Höhe entnommen.

Wenn der Elektrolytkondensator 12 eine höhere Spannung als der Elektrolytkondensator 14 führt, wird durch das dem Elektrolytkondensator 12 zugeordnete Halbbrückenmodul 44 über die elektrische Spule 36 des Transformators 34 die höhere Spannung an die elektrische Spule 38 weitergegeben, wodurch über das Halbbrückenmodul 44, das dem Elektrolytkondensator 14 zugeordnet ist, ein Ausgleich der Spannungen an den Elektrolytkondensatoren 12, 14 eingeleitet wird. Es besteht somit eine Kopplung der Spannungen an den Elektrolytkondensatoren 12, 14. Die Kopplung wird maßgeblich durch die Streuinduktivität zwischen den elektrischen Spulen 36, 38 des Transformators 34, der Kondensatoren 40, 42 und der Taktfrequenz des Taktgebers 32 bestimmt.

Dem Grunde nach kann die Schaltungsanordnung 60 wie die Schaltungsanordnung 30 auch ohne geregelte Ausgangsspannung ausgeführt werden, womit der Schaltungsaufwand reduziert werden kann. Eine Auswahl der Resonanzinduktivität und Resonanzkapazität braucht dadurch nicht eingeschränkt zu werden. Diese würden dann als Begrenzung der Stromanstiegsgeschwindigkeit beziehungsweise für einen künstlichen Mittelpunkt der Kondensatorbrücke dienen. Dadurch braucht nur bei Überstrom die Frequenz des Wandlers, insbesondere des Taktgebers 32, erhöht werden. Ein solcher Fall kann beispielsweise bei Anlauf auf einen entladenen Kondensator 54, bei Kurzschluss, bei großer Unsymmetrie zwischen den elektrischen Spannungen der Elektrolytkondensatoren 12, 14 oder dergleichen erfolgen.

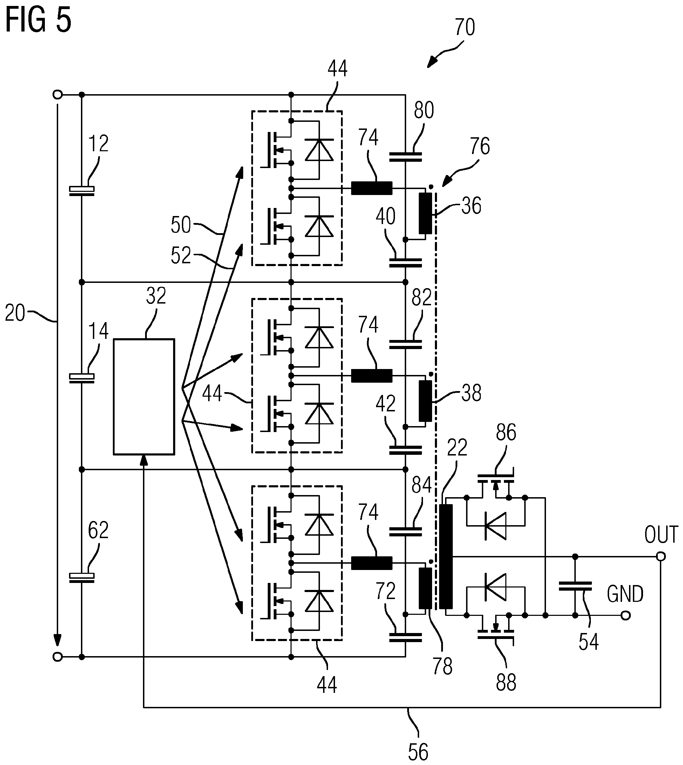

FIG 5 zeigt eine weitere Ausgestaltung einer Schaltungsanordnung 70 gemäß der Erfindung, die auf der Schaltungsanordnung 60 gemäß FIG 3 basiert. Deshalb wird ergänzend auf die Ausführungen zu diesem Ausführungsbeispiel verwiesen.

In Ergänzung zum Ausführungsbeispiel gemäß FIG 3 sind bei dieser Ausgestaltung drei Elektrolytkondensatoren 12, 14, 62 in Reihe geschaltet und mit der elektrischen Zwischenkreisspannung 20 beaufschlagt. Auch hier ist wieder ein Taktgeber 32 vorgesehen, der den jeweiligen Elektrolytkondensatoren 12, 14, 62 zugeordnete Halbbrückenmodule 44 steuert, wie zur FIG 3 bereits erläutert.

Im Unterschied zu FIG 3 ist ferner vorgesehen, dass im Anschluss der elektrischen Spulen 36, 38, 78 an die jeweiligen Mittelanschlüsse 110 der Halbbrückenmodule 44 Drosseln 74 geschaltet sind. Diese sind im Wesentlichen magnetisch nicht miteinander und auch nicht mit dem Transformator 76 gekoppelt. Für die elektrischen Spulen 36, 38, 78 gilt das, was bereits zu den vorhergehenden Ausführungsbeispielen ausgeführt wurde. Darüber hinaus sind die zweiten Anschlüsse der elektrischen Spulen 36, 38, 78 ergänzend durch Kondensatoren 80, 82, 84 mit dem jeweils positiven elektrischen Potential der zugeordneten Elektrolytkondensatoren 12, 14, 62 verbunden. Wie aus FIG 5 ersichtlich ist, kann auf diese Weise auch eine Mehrfachsymmetrierung erreicht werden. Die Resonanzinduktivität kann auch eine Serieninduktivität anstelle der Streuinduktivität von Primär- zu Sekundärwicklung nutzen, was vorliegend durch die Drosseln 74 realisiert ist. Allerdings sinkt hierdurch die Kopplung der Elektrolytkondensatoren 12, 14, 62 untereinander. Die Summe der beiden Kapazitäten 40, 80, sowie 42, 82 und auch 72, 84 bilden die jeweilige Resonanzkapazität.

Wie in FIG 3 ist auch hier wieder mittels einer elektrischen Spule 22 die Erzeugung einer Hilfsspannung 56 vorgesehen. Im Unterschied zur Ausführung gemäß FIG 3 sind die Dioden jedoch durch MOSFETs 86, 88 ersetzt, die entsprechend angesteuert werden. Dadurch kann die Verlustleistung gegenüber der Anordnung mit Dioden reduziert werden.

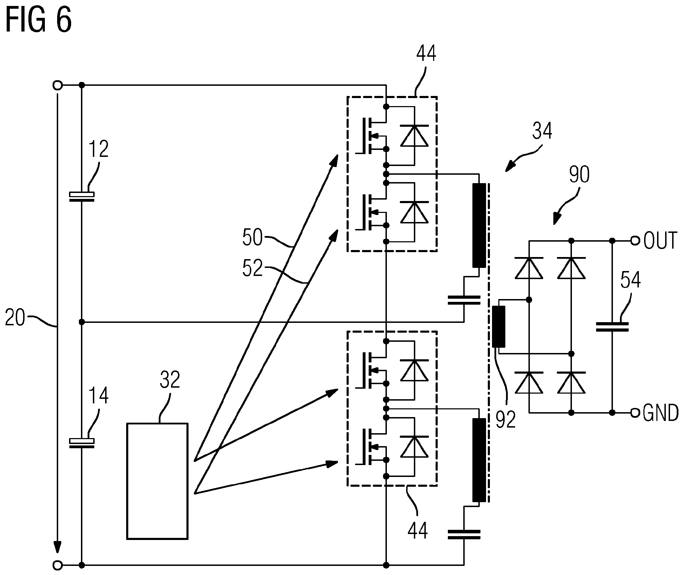

FIG 6 zeigt eine weitere Ausgestaltung einer Schaltungsanordnung gemäß der Erfindung, die auf der Ausgestaltung gemäß FIG 3 basiert. Auch hier wird deshalb zu den vorhergehenden Ausführungen verwiesen.

Im Unterschied zur Ausführung gemäß FIG 3 ist die Erzeugung der Hilfsspannung mit einer Wicklung 92 vorgesehen, die am Transformator 34 angeordnet ist. An die elektrische Spule 92 ist ein Brückengleichrichter 90 angeschlossen, der seinerseits die gleichgerichtete Spannung auf den Kondensator 54 einspeist. Das grundlegende Funktionsprinzip entspricht dem, wie es bereits zuvor erläutert wurde. Durch die Brückengleichrichtung mit dem Brückengleichrichter 90 kann eine hohe Leistung bei kompakter Wicklung erreicht werden.

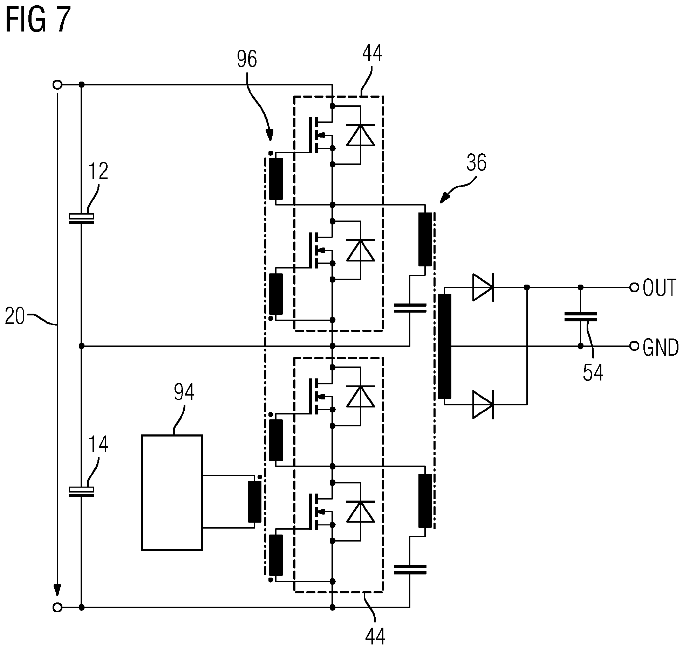

FIG 7 zeigt eine weitere Ausgestaltung einer Schaltungsanordnung gemäß der Erfindung, die auf dem Ausführungsbeispiel gemäß FIG 3 basiert, weshalb ergänzend auf die diesbezüglichen Ausführungen verwiesen wird.

Im Unterschied zum Ausführungsbeispiel gemäß FIG 3 ist bei dieser Ausgestaltung vorgesehen, dass ein Steuertransformator 96 vorgesehen ist, an den sämtliche Halbleiterschalter aller Halbbrückenmodule 44 mittels den Halbleiterschaltern zugeordneter sekundärseitiger Wicklungen zugeordnet sind. Primärseitig ist lediglich eine einzige Wicklung vorgesehen, die an einen Taktgeber 94 angeschlossen ist. Der Taktgeber 94 liefert ein Rechtecksignal mit einem Tastverhältnis von 1, wie es bereits zuvor erläutert worden ist. Das Rechtecksignal wird auf die primärseitige Wicklung gegeben und über die sekundärseitigen Spulen an die jeweiligen Halbleiterschalter weitergegeben. Dabei sind die sekundärseitigen Spulen für die jeweiligen Halbbrückenmodule 44 derart verschaltet, dass die beiden Halbleiterschalter des Halbbrückenmoduls 44 wechselseitig ein- beziehungsweise ausgeschaltet werden. Hierdurch wird neben einer Potentialtrennung zugleich auch der Taktgeber vereinfacht, der lediglich ein einziges Taktsignal bereitzustellen braucht.

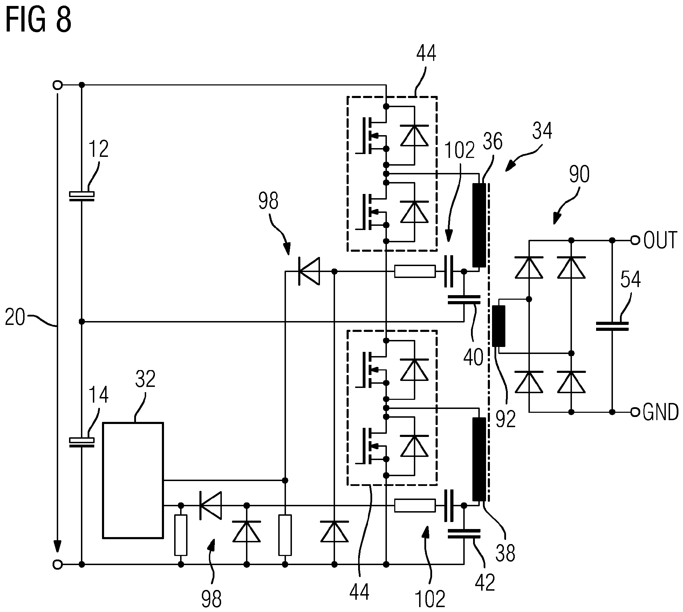

FIG 8 zeigt eine weitere Ausgestaltung für eine Schaltungsanordnung gemäß der Erfindung, die dem Grunde nach auf der Schaltungsanordnung gemäß FIG 6 basiert. Deshalb wird ergänzend auf die Ausführungen zu diesem Ausführungsbeispiel verwiesen.

In Ergänzung zu den Ausführungen gemäß FIG 6 ist bei der Ausgestaltung gemäß FIG 8 vorgesehen, dass für jedes Halbbrückenmodul 44 eine Strommesseinheit 102 vorgesehen ist. Vorliegend besteht die Strommesseinheit 102 aus einer Reihenschaltung eines elektrischen Widerstands und eines Kondensators, die von einer Gleichrichteinheit 98, die vorliegend zwei Dioden aufweist, gebildet ist. Diese bilden die Messschaltung. Der Ausgang der Gleichrichteinheit 98 ist mit einem Widerstand auf ein Bezugspotenzial geschaltet, hier das negative elektrische Potenzial der Zwischenkreisspannung 20. Die von den Gleichrichteinheiten 98 gelieferten Messspannungen werden dem Taktgeber 32 zur Auswertung und weiteren Verarbeitung zugeführt, weshalb die Gleichrichteinheiten 98 an den Taktgeber 32 angeschlossen sind. Diese Ausgestaltung vermeidet es, eine Strommessung in den einzelnen Halbbrückenmodulen 44 mittels Strom-Shunts vornehmen zu müssen. Die Erfindung nutzt zu diesem Zweck die Spannung der Kondensatoren 40, 42, auch Resonanzkondensatoren genannt. Durch die kapazitive Spannungsteilung kann eine Messspannung auf Basis des Spannungsniveaus des Taktgebers 32 erreicht werden.

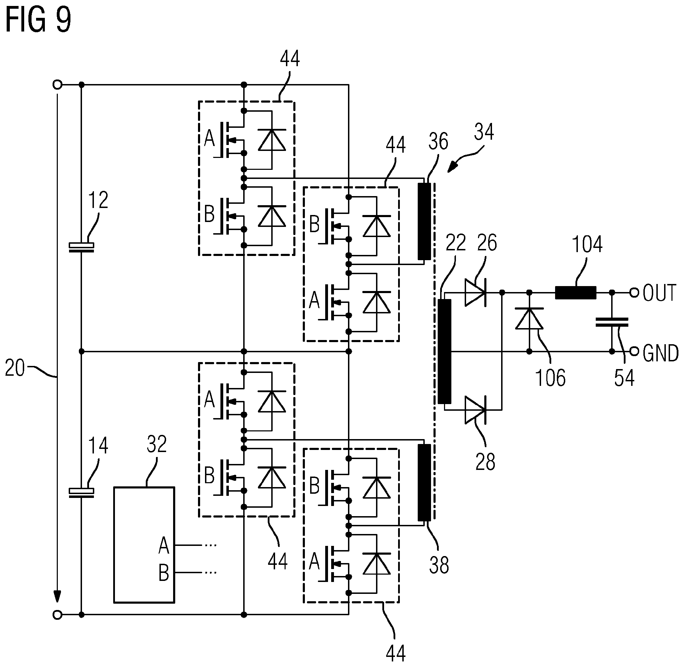

FIG 9 zeigt eine andere Ausgestaltung, die auf der Ausgestaltung gemäß FIG 3 basiert. Es wird deshalb ergänzend auf die Ausführungen zu diesem Ausführungsbeispiel verwiesen.

Im Unterschied zur Ausgestaltung gemäß FIG 3 ist hier vorgesehen, dass zu jedem der Elektrolytkondensatoren 12, 14 jeweils ein Paar von Halbbrückenmodulen 44 parallelgeschaltet ist. Zwischen den jeweiligen Mittelanschlüssen 110 der Halbbrückenmodule 44 sind die elektrischen Spulen 36 beziehungsweise 38 unmittelbar angeschlossen. Die beiden parallelgeschalteten Halbbrückenmodule 44 werden hinsichtlich ihrer Halbleiterschalter komplementär angesteuert, sodass die elektrischen Spulen 36, 38 jeweils mit der vollständigen Kondensatorspannung der Elektrolytkondensatoren 12, 14 beaufschlagt werden.

Die Schaltung gemäß FIG 9 stellt somit einen Vollbrückenbetrieb dar, und zwar in Form eines Vollbrücken-Gegentaktwandlers, vorzugsweise mit einer Pulsweitenmodulation. Zu diesem Zweck ist der Taktgenerator 32 entsprechend anders gesteuert, sodass er pulsweitenmodulierte Taktsignale A, B erzeugt, die auf die entsprechenden Halbleiterschalter der Halbbrückenmodule 44 geschaltet werden. Dadurch kann eine hohe Leistungsfähigkeit erreicht werden.

Darüber hinaus zeigt die Ausgestaltung gemäß FIG 9 hilfsspannungsseitig eine Drossel 104 und eine Diode 106, die zwischen den Dioden 26, 28 und dem Kondensator 54 angeschlossen ist. Dadurch kann eine geregelte Gleichspannung erzeugt werden.

Dem Grunde nach können die Elektrolytkondensatoren 12, 14 entladen werden, indem der Transformator 34 kontrolliert in der Sättigung betrieben wird und die Energie der Elektrolytkondensatoren 12, 14 als Verluste durch Wirbelströme im Transformator 34 abgebaut wird. Durch Herabsetzen der Taktfrequenz und/oder Erhöhung einer Abschaltstromgrenze kann dies erreicht werden, wobei für diesen Zweck eine Sättigungscharakteristik, des Transformators 34, insbesondere seines ferromagnetischen Kerns, eher weich sein sollte, sodass ein langsamer Stromanstieg bei Eintritt der Sättigung erreicht werden kann.

Ein wichtiger Vorteil bei der Symmetrierung von elektrischen Spannungen an in Reihe geschalteten Kondensatoren mittels eines Transformators gemäß der Erfindung liegt darin, dass die Schaltung gegenüber einer Widerstandssymmetrierung sowohl bei gleichen als auch bei ungleichen Leckströmen der Kondensatoren kaum Verlustleistung erzeugt. Darüber hinaus kann mit der Schaltungsanordnung der Erfindung auf einfache Weise eine Hilfsspannung zur elektrischen Versorgung des Taktgebers beziehungsweise auch weiterer Geräte/Verbraucher realisiert werden. Des Weiteren ermöglicht es die Erfindung, eine Überwachung der Schaltungsanordnung bereitzustellen, um Störungen entgegenwirken zu können. Beispielsweise kann die Überwachung eines Stroms der Halbleiterschalter dazu dienen, der bei sehr hoher Unsymmetrie der elektrischen Spannungen an den Elektrolytkondensatoren innerhalb sehr kurzer Zeit rasch ansteigt. Dadurch könnte zum Beispiel eine Abschaltung der gesamten Anlage realisiert werden. Sollte eine Widerstandsbeschaltung dennoch ergänzend erforderlich sein, beispielsweise um ein sicheres Entladen der Elektrolytkondensatoren nach Abschaltung des bestimmungsgemäßen Betriebs zu gewährleisten oder dergleichen, braucht lediglich dies als Auslegungskriterium der elektrischen Widerstände herangezogen werden.

Die Schaltungstopologie stellt geringe Anforderungen an die Spannungsfestigkeit der verwendeten Bauteile. Die Topologie der Schaltungsanordnung besitzt aufgrund des Resonanzbetriebs einen guten Wirkungsgrad, womit eine hohe Ausgangsleistung und ein gutes Verhalten in Bezug auf elektromagnetische Verträglichkeit erreicht werden kann. Der Wirkungsgrad insbesondere in Bezug auf die Vollbrückenschaltung ist ebenso für eine hohe Ausgangsleistung geeignet und besitzt einen akzeptablen Wirkungsgrad.

Die Beschreibung dient lediglich der Erläuterung der Erfindung und soll diese nicht beschränken.

## Patentansprüche

1. Schaltungsanordnung (30,60,70) zum Symmetrieren von elektrischen Spannungen an elektrischen Kondensatoren (12,14) in einer Reihenschaltung, mit jeweils einem an jedem der elektrischen Kondensatoren (12, 14) angeschlossenen Halbbrückenmodul (44), welches einen Mittelanschluss (110) bereitstellt, und mit einem Taktgeber (32, 94) zum Betreiben aller Halbbrückenmodule (44) im Taktbetrieb, wobei an den Mittelanschluss (110) jedes Halbbrückenmoduls (44) ein jeweiliger erster Anschluss einer dem jeweiligen Halbbrückenmodul (44) individuell zugeordneten elektrischen Spule (36,38,78) angeschlossen ist, und ein zweiter Anschluss dieser elektrischen Spule (36,38,78) entsprechend über einen Serienkondensator (40, 42, 72) an einem von zwei Anschlüssen des parallel zum entsprechenden Halbbrückenmodul (44) angeschlossenen Kondensators (12, 14) angeschlossen ist, wobei der Taktgeber (32, 94) eingerichtet ist, die Halbbrückenmodule (44) im Taktbetrieb synchron zu betreiben, und wobei die elektrischen Spulen (36,38,78) magnetisch derart gekoppelt sind, dass sich die durch die elektrischen Spulen (36,38,78) erzeugten magnetischen Flüsse addieren,
**dadurch gekennzeichnet, dass** der jeweilige Serienkondensator (40, 42, 72) im Betrieb der Schaltungsanordnung als Resonanzkondensator betrieben wird.

2. Schaltungsanordnung nach Anspruch 1, **gekennzeichnet durch** eine Hilfsspule (22,92), die magnetisch mit den elektrischen Spulen (36,38,78) gekoppelt ist.

3. Schaltungsanordnung nach Anspruch 2, **dadurch gekennzeichnet, dass** die Hilfsspule (22,92) eine Mittelanzapfung aufweist.

4. Schaltungsanordnung nach einem der Ansprüche 1 bis 3, **gekennzeichnet durch** einen Steuertransformator (96) zum steuerseitigen Koppeln der Halbbrückenmodule (44) mit dem Taktgeber (32,94).

5. Schaltungsanordnung nach einem der Ansprüche 1 bis 4, **gekennzeichnet durch** Strommesseinheiten für jede der Halbbrückenmodule (44), die jeweils eine an den Serienkondensatoren angeschlossene Messschaltung (102) aufweisen.

6. Schaltungsanordnung nach Anspruch 5, **dadurch gekennzeichnet, dass** die Messschaltung (102) eine Gleichrichteinheit (98) aufweist.

7. Verfahren zum Symmetrieren von elektrischen Spannungen an elektrischen Kondensatoren (12,14) in einer Reihenschaltung, wobei ein jeweils an jedem der elektrischen Kondensatoren (12, 14) angeschlossenes und einen Mittelanschluss (110) bereitstellendes Halbbrückenmodul (44) im Taktbetrieb mittels eines Taktgebers (32,94) synchron mit allen weiteren Halbbrückenmodulen (44) betrieben wird, wobei mittels jeweils den elektrischen Kondensatoren (12,14) individuell zugeordneter und magnetisch miteinander gekoppelter elektrischer Spulen (36,38,78) magnetische Flüsse erzeugt werden, und wobei die elektrischen Spulen (36,38,78) mit jeweils einem ersten Anschluss an Mittelanschlüssen (110) der entsprechenden Halbbrückenmodule (44) sowie mit jeweils einem zweiten Anschluss über einen Serienkondensator (40, 42, 72) an den dazu jeweils parallelgeschalteten elektrischen Kondensatoren (12,14) derart angeschlossen sind, dass sich die durch die elektrischen Spulen (36,38,78) erzeugten magnetischen Flüsse addieren,
**dadurch gekennzeichnet, dass** der jeweilige Serienkondensator (40, 42, 72) im Betrieb der Schaltungsanordnung als Resonanzkondensator betrieben wird.

8. Verfahren nach Anspruch 7, **dadurch gekennzeichnet, dass** mittels einer Hilfsspule (22,92) eine Hilfsspannung (56) erzeugt wird.

9. Verfahren nach Anspruch 7 oder 8, **dadurch gekennzeichnet, dass** ein Wert der Hilfsspannung (56) mittels einer Taktfrequenz des Taktgebers (32,94) eingestellt wird.

## Claims

1. Circuit arrangement (30, 60, 70) for balancing electric voltages of electric capacitors (12, 14) in a series circuit, having in each case a half bridge module (44) connected to each of the electric capacitors (12, 14), which provides a central terminal (110), and having a clock generator (32, 94) for operating all half bridge modules (44) in cyclic operation, wherein a respective first terminal of an electric coil (36, 37, 78) assigned individually to the respective half bridge module (44) is connected to the central terminal (110) of each half bridge module (44), and a second terminal of this electric coil (36, 38, 78) is connected accordingly via a series capacitor (40, 42, 72) to one of two terminals of the capacitor (12, 14) connected in parallel to the corresponding half bridge module (44), wherein the clock generator (32, 94) is designed to operate the half bridge modules (44) in synchrony in cyclic operation, and wherein the electric coils (36, 38, 78) are coupled magnetically such that the magnetic fluxes generated by the electric coils (36, 38, 78) add together,
**characterised in that** during operation of the circuit arrangement as a resonance capacitor the respective series capacitor (40, 42, 72) is operated.

2. Circuit arrangement according to claim 1, **characterised by** an auxiliary coil (22, 92) which is coupled magnetically to the electric coils (36, 38, 78).

3. Circuit arrangement according to claim 2, **characterised in that** the auxiliary coil (22, 92) has a central tapping.

4. Circuit arrangement according to one of claims 1 to 3, **characterised by** a control transformer (96) for coupling the half bridge modules (44) to the clock generator (32, 94) on the control side.

5. Circuit arrangement according to one of claims 1 to 4, **characterised by** current measuring units for each of the half bridge modules (44), which have a measuring circuit (102) connected to the series capacitors in each case.

6. Circuit arrangement according to claim 5, **characterised in that** the measuring circuit (102) has a rectifier unit (98).

7. Method for balancing electric voltages of electric capacitors (12, 14) in a series circuit, wherein a half bridge module (44) connected in each case to each of the electric capacitors (12, 14) and providing a central terminal (110) is operated in synchrony with all further half bridge modules (44) in cyclic operation by means of a clock generator (32, 94), wherein magnetic fluxes are generated by means in each case of electric coils (36, 38, 78) coupled magnetically to one another and assigned individually to the electric capacitors (12, 14) in each case, and wherein the electric coils (36, 38, 78) with in each case a first terminal with central terminals (110) of the corresponding half bridge modules (44) and with in each case a second terminal are connected to the electric capacitors (12, 14) connected in parallel in each case via a series capacitor (40, 42, 72) such that the magnetic fluxes generated by the electric coils (36, 38, 78) add together, **characterised in that** during operation of the circuit arrangement the respective series capacitor (40, 42, 72) is operated as a resonance capacitor.

8. Method according to claim 7, **characterised in that** an auxiliary voltage (56) is generated by means of an auxiliary coil (22, 92).

9. Method according to claim 7 or 8, **characterised in that** a value of the auxiliary voltage (56) is adjusted by means of a clock frequency of the clock generator (32, 94).

## Revendications

1. Montage (30, 60, 70) d'équilibrage de tensions électriques sur des condensateurs (12, 14) électriques d'un circuit série, comprenant chacun un module (44) en demi-pont, qui est connecté à chacun des condensateurs (12, 14) électriques et qui procure une borne (110) médiane, et comprenant une horloge (32, 94) pour faire fonctionner tous les modules (44) en demi-pont en cadence, dans lequel à la borne (110) médiane de chaque module (44) en demi-pont est connectée une première borne respective d'une bobine (36, 38, 78) électrique associée individuellement au module (44) respectif en demi-pont et une deuxième borne de cette bobine (36, 38, 78) électrique est connectée, d'une manière correspondante par un condensateur (40, 42, 72) série, à l'une de deux bornes du condensateur (12, 14) monté en parallèle au module (44) en demi-pont correspondant, l'horloge (32, 94) étant conçue pour faire fonctionner les modules (44) en demi-pont en synchronisme en fonctionnement cadencé et les bobines (36, 38, 78) électriques étant couplées magnétiquement, de manière à additionner les flux magnétiques produits par les bobines (36, 38, 78) électriques,
**caractérisé en ce que** le condensateur (40, 42, 72) série respectif fonctionne, lorsque le montage est en fonctionnement, en condensateur de résonnance.

2. Montage suivant la revendication 1, **caractérisé par** une bobine (22, 92) auxiliaire, qui est couplée magnétiquement aux bobines (36, 38, 78) électriques.

3. Montage suivant la revendication 2, **caractérisé en ce que** la bobine (22, 92) auxiliaire a une prise médiane.

4. Montage suivant l'une des revendications 1 à 3, **caractérisé par** un transformateur (96) de commande pour le couplage du côté de la commande des modules (44) en demi-pont à l'horloge (32, 94).

5. Montage suivant l'une des revendications 1 à 4, **caractérisé par** des unités de mesure du courant pour chacun des modules (44) en demi-pont, qui ont chacune un circuit (102) de mesure connecté aux condensateurs série.

6. Montage suivant la revendication 5, **caractérisé en ce que** le circuit (102) de mesure a une unité (98) de redresseur.

7. Procédé d'équilibrage de tensions électriques sur des condensateurs (12, 14) électriques d'un circuit série, dans lequel on fait fonctionner un module (44) respectif en demi-pont, raccordé à chacun des condensateurs (12, 14) électriques et procurant une borne (110) médiane, en fonctionnement cadencé au moyen d'une horloge (32, 94) en synchronisme avec tous les autres modules (44) en demi-pont, dans lequel on produit des flux magnétiques au moyen de bobines (36, 38, 78) électriques associées individuellement chacune aux condensateurs (12, 14) électriques et couplées entre elles magnétiquement, et dans lequel les bobines (36, 38, 78) électriques sont connectées à respectivement une première borne des bornes (110) médianes des modules (44) en demi-pont correspondant, ainsi qu'à respectivement une deuxième borne, par l'intermédiaire d'un condensateur (40, 42, 72) série, aux condensateurs (12, 14) électriques montés respectivement en parallèle à celui-ci, de manière à additionner les flux magnétiques produits par les bobines (36, 38, 78) électriques,
**caractérisé en ce que** l'on fait fonctionner le condensateur (40, 42, 72) série respectif, alors que le montage est en fonctionnement, en condensateur de résonnance.

8. Procédé suivant la revendication 7, **caractérisé en ce que** l'on produit une tension (56) auxiliaire au moyen d'une bobine (22, 92) auxiliaire.

9. Procédé suivant la revendication 7 ou 8, **caractérisé en ce que** l'on règle une valeur de la tension (56) auxiliaire au moyen d'une fréquence de l'horloge (32, 94).
